# EUROPEAN PATENT SPECIFICATION

(11) **EP 0 553 714 B1**
(45) Date of publication and mention of the grant of the patent: **27.12.1995**
(21) Application number: 93100906.2
(22) Date of filing: 21.01.1993
(51) Int. Cl.: C09D 175/04

(54) **Highly crosslinked, low VOC surface coating compositions comprising polyurethane dispersions**
Hochvernetzte, auf Polyurethandispersionen basierende Beschichtungsmittel mit niedrigem VOC-Anteil
Compositions de revêtement hautement réticulées à bas contenu de composés organiques volatils, à base de dispersions polyuréthanne

(30) Priority: 21.01.1992 US 823514
(43) Date of publication of application: 04.08.1993
(73) Proprietor: THE SHERWIN-WILLIAMS COMPANY, Cleveland Ohio 44115-1075 (US)
(72) Inventor: Tomko, Revathi, North Olmsted, Ohio 44070 (US); DeCapite, Marianne G., North Royalton, Ohio 44133 (US)
(74) Representative: Abitz, Walter, Dr.-Ing.

(56) References cited:
- US-A- 4 387 181
- US-A- 4 742 095

## Description

### BACKGROUND OF THE INVENTION

This invention relates to new and improved, highly crosslinked, surface coating compositions which comprise aqueous polyurethane dispersions. These compositions are particularly suited for use as floor coatings, maintenance coatings, and clear and pigmented coatings for use on architectural surfaces such as walls, woodwork and millwork.

Well known in the coatings industry are varnishes, shellacs and solvent-based polyurethane. Because each of the above forms a hard film over the substrate, such coatings are often referred to as surface coatings. Also well known are penetrating finishes, which are designed to protect a substrate, and typically change a substrate's color, yet retain the natural textural appearance of the substrate. Penetrating pigmented stains, non-pigmented wood preservatives, and water sealants are typical examples of penetrating finishes.

With the advent of environmental laws and regulations controlling the maximum amounts of VOC permitted in paints, coatings, stains, sealants and the like, it is desirable to formulate varnishes, shellacs and polyurethanes which comply with the VOC requirements.

U.S. Patent 3,870,684 (Witt et al.) teaches a process for the preparation of sedimenting and redispersible crosslinked particles. The polyurethane prepolymer is crosslinked in water with a tri- or higher functional amine. Large amounts of solvent such as acetone are used in the preparation of the prepolymer to maintain lower viscosities. The solvent is later stripped out of the composition. The isocyanate-functional materials used by Witt et al. include aliphatic and aromatic diisocyanates including 1,5-naphthalene diisocyanate, 4,4'-diphenyl-dimethane diisocyanate, 1,4-phenylene diisocyanate and others.

U.S. Patent 4,203,883 (Hangauer et al.) teaches a process for making colloidal dispersion Of urea-urethane polymers. Here the polyurethane prepolymer is chain extended with a mixture of diamine and triamine chain extenders. On average, the total amine functionality is between about 2.2 and 2.8 amine nitrogen atoms having active hydrogen functionality per molecule. This process also uses a large amount of solvent (methyl ethyl ketone) in order to maintain lower viscosities. The solvent is later stripped out of the composition. The isocyanate-functional materials used by Hangauer et al. include the aliphatic and alicyclic diisocyanates such as 2,4-toluene diisocyanate, 2,6-toluene diisocyanate, 1,4-cyclohexane diisocyanate, dicyclohexylmethane 4,4'-diisocyanate, xylene diisocyanate, 1-isocyanato-3-isocyanatomethyl-3,5,5,-trimethylcyclohexane, hexamethylene diisocyanate, methylcyclohexyl diisocyanate, and 2,4,4-trimethyl-hexylmethylene diisocyanate.

This invention is directed to new and improved surface coatings which comprise aqueous dispersions of highly crosslinked polyurethane-ureas. Unlike the polyurethanes of Witt et al. and Hangauer et al., the compositions of this invention are extremely low in volatile organic content (VOC), yet exhibit excellent properties not heretofore available from other low VOC compositions. The compositions of this invention can be formulated without volatile organic solvent resulting in zero VOC. This is accomplished through the use of a particular group of isocyanate-functional compounds which enable the formation of polyurethane-urea dispersions having lower viscosity than that which can be obtained when using traditional isocyanates.

### SUMMARY OF THE INVENTION

The present invention relates to low VOC, highly crosslinked surface compositions for use on surfaces such as wood, concrete, cement, brick, metal, plastic, paper, textiles, leather, cloth and the like. In particular, this invention relates to stable dispersions of highly crosslinked polyurethane-ureas in water. The dispersions of this invention are particularly useful as environmentally compliant surface coatings.

The present invention relates to low VOC stable, highly crosslinked dispersions of polyurethane-ureas in an aqueous solvent which are especially suitable as surface coatings. The dispersions of this invention have excellent abrasion resistance, solvent resistance, shelf stability, and UV light stability These dispersions are particularly suited for use, either alone or with additional ingredients such as pigments, waxes and the like, as surface coatings in place of traditional varnishes, shellacs and solvent-based polyurethane finishes.

The present invention utilizes an aromatic isocyanate having two isocyanate functional groups located on the aromatic ring structure in the meta positions to each other, as further described below. The present invention utilizes tri-functional amines to crosslink the composition. As a result, the polyurethane-ureas of this invention are predominantly highly crosslinked molecules.

### DETAILED DESCRIPTION OF THE INVENTION

The compositions of this invention are surface coatings which comprise low VOC, stable dispersions of highly crosslinked polyurethane-ureas in an aqueous media. Preferably, the particle size of the polyurethane-urea molecules is less than about 0.2 micron, and most preferably in the range of about 0.01 to about 0.2 micron. When dispersed in an aqueous media and crosslinked with a tri-functional amine, the polyurethane-ureas have a theoretical free lsocyanate functionality of zero. Surprisingly, in light of the highly crosslinked character of the molecules, the dispersions have low viscosities, no grit levels, excellent stability and can be formulated to higher solids levels using little or no solvents.

The compositions of this invention are produced by first reacting at least one polyol, preferably selected from the group consisting of polyols such as
1) polyols such as the saturated and unsaturated polyhydric alcohols including ethylene glycol, propylene glycol, neopentyl glycol, 1,4-butanediol, 1,4-butenediol, 1,6-hexanediol, furan dimethanol, and cyclohexane dimethanol;
2) polyester polyols formed from the reaction of saturated and unsaturated polyhydric alcohols such as ethylene glycol, propylene glycol, neopentyl glycol, 1,4-butanediol, 1,4-butenediol, 1,6-hexanediol, furan dimethanol, and cyclohexane dimethanol, with saturated and unsaturated polycarboxylic acids and derivatives thereof such as maleic acid, fumaric acid, itaconic acid, succinic acid, glutaric acid, adipic acid, isophthalic acid, terephthalic acid, phthalic anhydride, dimethyl terephthalate, dimer acids and the like;
3) polyesters formed by the reaction of lactones, such as caprolactone, with a polyol;
4) polyether polyols such as the products of the polymerisation of a cyclic oxide such as ethylene oxide, propylene oxide or tetrahydrofuran;
5) polyether polyols formed by the addition of one or more cyclic oxides to water, ethylene glycol, propylene glycol, diethylene glycol, cyclohexane dimethanol, glycerol, or Bisphenol A;
6) polycarbonate polyols such as the reaction product of 1,3-propanediol, 1,4-butanediol, 1,6-hexanediol, diethylene glycol or tetraethylene glycol with diaryl carbonates such as diphenyl carbonate or phosgene;
7) polyacetal polyols such as the reaction product of a glycol such as diethylene glycol, triethylene glycol or hexanediol with formaldehyde;
8) polyols such as dihydroxyalkanoic acids including dimethylolpropionic acid;
and mixtures thereof, with an isocyanate composition having two isocyanate-functional groups.

The particular isocyanate compositions suitable for use in this invention comprise an aromatic ring wherein the 1,3 (meta) carbons each have an isocyanate-functional chain pendent thereto where the NCO group is at least one carbon atom removed from the aromatic ring.

Present during the reaction is up to about 0.06%, preferably between about 0.01% and about 0.04% (by weight based upon total solids of polyol and isocyanate) of a catalyst such a di-butyl tin dilaurate, tin octoate and the like.

The preferred ratio of isocyanate to polyol should be such that there is an excess of isocyanate functionality over hydroxy functionality. The ratio of equivalents of NCO to OH should be between about 1.0:1 to about 3.0:1; preferably between about 1.3:1 to about 2.0:1.

To ensure that the polyurethane-urea intermediate is dispersible in an aqueous media, it is essential that a percentage of the total polymer weight solids, preferably between about 1% and about 10%, is contributed by polyols (or other compositions having active hydrogen atoms or the ability to react with isocyanates, such as amines or mercaptans) having the ability to contribute ionic or hydrophilic groups to the polyurethane-urea; for example, polyols, amines or mercaptans containing carboxylic acid groups, sulfonic acid groups, phosphoric acid groups, ammonium salts, phosphonium salts or sulfonium salts. Acceptable polyols, amines and the like are described at Column 10, lines 18-69 of U.S. Patent 4,880,867, which portion of said patent is incorporated herein by reference.

The reaction is typically carried out by charging the polyol with the catalyst to a reaction vessel, heating the contents to a temperature of between about 70°C and about 100°C, and adding, via continuous or stepwise addition over a period of time, preferably between about 1/2 hour to about 4 hours, the isocyanate-functional materials. Although, not necessary, optionally present can be a solvent such as n-methyl pyrolidinone, dimethyl formamide, methyl ethyl ketone, toluene, and mixtures thereof in an amount ranging up to about 20% by weight based upon the total weight of the materials present in the reaction vessel. Concern for maintaining the VOC of the composition requires that the amount of solvent used be low. After complete addition of the isocyanate materials, the reaction vessel temperature is maintained between about 80° and 100°C for so long as necessary to bring the residual isocyanate percentage (based upon the total solids weight of the polymer) below about 8.0%, preferably into a range between about 1.5% to about 6.0%. This takes approximately 2 to 4 hours. Residual isocyanate percentage can be measured by any means well known in the art. The contents are then cooled to below about 70°C and the ionic groups present in the product of the above reaction are then neutralized by the addition of a weak base, such as triethylamine, trimethylamine, triisopropyl amino, tributyl amine, triethylene diamine (e.g. DABCO™, commercially available from Air Products Co.), N,N-dimethyl-cyclohexyl amine, N,N-dimethylstearyl amine, N,N-dimethyl aniline, N-methylmorpholine, N-ethylmorpholine, N-methylpiperazine, N-methylpyrolidine, N-methylpiperidine, N,N-dimethyl-ethanol amine, N,N-diethyl-ethanol amine, triethanol amine, N-methyldiethanol amine, dimethylaminopropanol, 2-methoxyethyldimethyl amine, N-hydroxyethylpiperazine, 2-(2-dimethylaminoethoxy)-ethanol and 5-diethylamino-2-pentanone and mixtures thereof. Most preferred neutralization agents are the tertiary amines as they are not reactive with the free isocyanate groups. The weak base can be added in excess, that is, an amount greater than that necessary to neutralize the ionic groups; however, too much weak base will cause an unacceptable increase in the VOC of the composition. At a minimum, the amount of weak base added should be sufficient to neutralize at least about 80% of the ionic groups present in solution. Preferably, the weak base is added in an amount sufficient to theoretically neutralize 100% of the ionic groups.

The intermediate is then dispersed in water, or an aqueous-based solvent. The percentage of solids in the water or aqueous solvent can range up to about 60% by weight, preferably between about 20% to 50% by weight. The dispersion is preferably cooled to a temperature of between about 15 C and about 45 C.

A trifunctional amine compound selected from the group consisting of alkyl and cycloalkyl triamines such as diethylene triamine (DETA), dipropylenetriamine, dibutylenetriamine, mixtures thereof, equivalents thereof and the like in an amount sufficient to react with up to about 100% of the theoretical amount of residual NCO functionality is next included in the dispersing media for crosslinking of the polyurethane. Triamine crosslinking agents produce high levels of branching. Only minor amounts (up to about 1-2% by weight of total amine added at this time) of diamine such as ethylene diamine, propylene diamine, butylene diamine, hexamethylene diamine, cyclohexylene diamine, piperazine, hydrazine, mixtures thereof, equivalents thereof and the like can be added along with the triamine. The percentage of diamine is preferably low as the diamine does not contribute to the formation of highly crosslinked molecules, but rather, tends to increase the formation of linear molecules.

Preferably, the polyols are predominantly di-functional. However, higher-functional alcohols can also be included. The most preferred polyols are a combination of 1) the polyester polyols formed from the reaction of saturated and unsaturated dihydric alcohols such as ethylene glycol, propylene glycol, neopentyl glycol, 1,4-butanediol, 1,4-butenediol, 1,6-hexanediol, furan dimethanol, and cyclohexane dimethanol with saturated and unsaturated polycarboxylic acids such as maleic acid, fumaric acid, itaconic acid, succinic acid, glutaric acid, adipic acid, isophthalic acid, terephthalic acid, phthalic anhydride, dimethyl terephthalate, dimer acids and the like; and 2) a polyol containing hydrophilic groups. One such preferred polyester diol is Rucoflex™ 1015-120 (a mixture of polyester diols based on neopentyl glycol, hexanediol and adipic acid, commercially available from Ruco Polymer Corporation). A particularly preferred polyol containing hydrophilic groups is dimethylolpropionic acid. When used, these two polyols are preferably present in percentages such that the Rucoflex material contributes between about 40% to about 80% of the OH functionality of the total materials.

The isocyanate-functional materials are exclusively aromatic isocyanates selected from those isocyanates having an asymmetrical orientation of their isocyanate functionalities. As described above, the isocyanates comprise an aromatic ring wherein the 1,3 (meta) carbon atoms have pendent thereto a carbon chain having isocyanate functionality. The isocyanate functional groups must be at least one carbon atom removed from the aromatic ring. The required isocyanate structure is shown in Figure I: 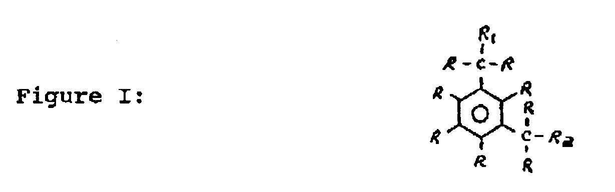
wherein each R is independently hydrogen, alkyl, aralkyl, or substituted alkyl groups and R1 and R2 are each isocyanate-functional. A highly preferred isocyanate is m-TMXDI (benzene 1,3-bis (1-isocyanato-1-methylethyl)) although other isocyanates having this particular geometry should be considered equivalents to m-TMxDI.

A minor percentage of the isocyanate-functional materials can have geometries different from that shown in Figure I, above, however, inclusion of large amounts of other structures will result in unacceptably high viscosities for the polyurethane prepolymer and gelling when formulated with little or no solvent. Generally, such isocyanate-functional materials should not be present in weight percentages greater than about 1-5%.

The dispersing media is preferably water. The amount of dispersing media should be between about 40% and about 80% by weight of total reaction ingredients. More preferably, the percentage of dispersing media is between about 50% and 80% by weight. The triamine crosslinking agent is added after the polyurethane intermediate is dispersed in the dispersing media. It should preferably be present or added in an amount sufficient to react with up to about 100% of the residual NCO functionality. The reactants are allowed to react at a temperature between about 15 C and about 45 C for approximately 1/2 hour.

Once dispersed into the dispersing media, the composition can be modified with other standard ingredients commonly used to formulate surface coatings. For example, the dispersions of this invention can be combined with other ingredients such as pigments, colorants, paraffin, waxes, UV light stabilizers, rheology modifiers, mildewcides, biocides, fungicides, and other conventional additives to form excellent coatings for wood, concrete, cement, brick, floor coatings, maintenance coatings, and clear and pigmented coatings for use on other architectural surfaces such as walls, woodwork and millwork. Colorants and pigment dispersions, when used, are typically added in amounts up to about 15% by volume of the total composition.

The following examples demonstrate the methods of preparation of the coatings of this invention. The examples are intended to be representative of the formulations which can be made and are not intended to limit the scope of the invention.

### EXAMPLE I--PREPARATION OF THE DISPERSION

Charge 14.0g of n-methyl pyrolidinone, 370.64g of Rucoflex® 1015-120 (.814 eq of OH), 23.00g of dimethylolpropionic acid (.343 eq of OH) and 1.6g of dibutyl tin dilaurate (10% solution in n-methyl pyrolidinone) to a reaction vessel equipped with a nitrogen blanket. Begin stirring and increase temperature to about 85°C. Begin a one hour addition of 214.89g of m-TMXDI (1.76 eq of NCO). After addition of all isocyanate-functional materials, hold the reaction at 85°C for approximately 3.5 hours. The free NCO content at this time measures about 4.2%. Add 17.67g of triethylamine to neutralize the ionic groups and hold the reaction for another 1/2 hour. Disperse the resultant material into 997.5g of water, disperse well and cool. Over a ten minute period, dropwise add 21.41g of diethylene triamine. Filter through a 75 micron mesh filter.

The composition prepared according to the above had the following characteristics:

| | |
|---|---|
| pH | 9.25 |
| Particle Dia: | approx. 67 nm |
| Viscosity: | approx. 25 cps (Brookfield LVT #2, 30 rpm) |

The composition was drawn down onto an untreated Q steel panel to a dry film thickness of 50.1 »m (2 mils) and allowed to air dry for 24 hours. After 24 hours, it had a pencil hardness of H-2H and a 20/60 gloss reading of 47.9/95.4. The film experienced no adverse effects when a water spot test was conducted according to ASTM D 3023-88.

### EXAMPLE II--COATING USING DISPERSION OF EXAMPLE I

The following represents a floor coating composition using the polyurethane-urea dispersion of Example I.

| | |
|---|---|
| Water | 430.71 g |
| Dispersion of Example I | 380.60 |
| POE-5 Nonylphen Triton N-57 | 2.00 |
| Surfynol 104E Anionic NF637 | 1.00 |
| Proxcel GXL Biocide | 0.50 |
| Propylene Glycol, Ind. | 30.00 |
| EXP-300 Rheol. Modifier | 8.00 |
| Surfynol® 104E Anionic NE637 | 1.00 |
| | 853.81 g |

The coating has a NVM of 17.6 and a weight per litre (per gallon) of 1.02 kg/l (8.54 lbs per gallon).

### EXAMPLE III--PREPARATION OF ZERO VOC DISPERSION

A zero VOC composition was prepared using the formula below:
Charge 370.64g of Rucoflex® 1015-120 (.814 eq of OH), 28.00g of dimethylolpropionic acid (.417 eq of OH), 15g neopentyl glycol (0.288 eq of OH) and 1.6g of dibutyl tin dilaurate (10% solution in n-methyl pyrolidinone) to a reaction vessel equipped with a nitrogen blanket. Begin stirring and increase temperature to about 85°C. Begin a one hour addition of 293.65g of m-TMXDI (2.41 eq of NCO). After addition of all isocyanate-functional materials, hold the reaction at 85°C for approximately 3.5 hours. The free NCO content at this time measures about 5.2%. Add 21.5g of triethylamine to neutralize the ionic groups and hold the reaction for another 1/2 hour. Disperse the resultant material into 1351.97g of water, disperse well and cool. Over a ten minute period, dropwise add 22.22g of diethylene triamine. Filter through a 75 micron mesh filter.

The composition prepared according to the above had the following characteristics:

| | |
|---|---|
| pH | 7.89 |
| Viscosity: | approx. 25 cps (Brookfield LVT #2, 12 rpm) |

The composition was drawn down onto an untreated Q steel panel to a dry film thickness of 50.1 »m (2 mils) and allowed to air dry for 24 hours. After 24 hours, it had a pencil hardness of H and a 20/60 gloss reading of 40.3/92.3. The film experienced no adverse effects when a water spot test was conducted according to ASTM D 3023-88.

### COMPARATIVE EXAMPLES

Isocyanates having different structural geometries than that of the present invention were attempted using substantially the same procedures and formula of Example I. The results of these experiments are shown below. As can be seen from Comparative Examples I and II, those isocyanates having geometries outside that taught by the present invention gelled when formulated at the same solvent levels. As can be seen from Comparative Examples III and IV, when formulated to solvent levels 8-10 times that of the present invention, the films were soft and non-glossy or wrinkled.

| Comp. EX. | NCO | Calc. %NCO | %Solvent | %Solids | Result |
|---|---|---|---|---|---|
| I | DesW | 3.9 | 0.87 | 38.0 | Gel |
| II | IPDI | 4.2 | 0.70 | 28.9 | Gel |
| III | DesW | 4.1 | 6.71 | 37.9 | Dull Film Hardness: 2B (after 24 hours) |
| IV | IPDI | 4.0 | 6.99 | 36.0 | Wrinkled Film Hardness: B (after 24 hours) |

- DesW: = Desmodur® W (Dicyclohexylmethane-4,4'-diisocyanate)
- IPDI: = Isophorandiisocyanate

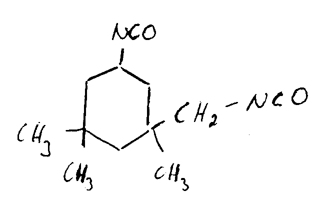

## Claims

1. A composition comprising a dispersion of a polyurethane-urea in an aqueous media wherein the polyurethane-urea comprises the dispersion in an aqueous media of the reaction product of:
i) at least one polyol with
ii) at least one isocyanate-functional material having the structure: 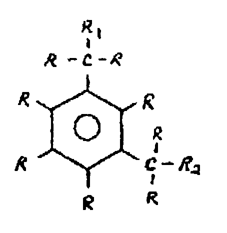
wherein each R is independently hydrogen, alkyl, aralkyl, or substituted alkyl groups and R1 and R2 are each isocyanate-functional;
wherein the reaction between i) and ii) takes place in the presence of between about 0.01% to about 0.06% by weight of a catalyst;
wherein the ratio of i) to ii) is such that the ratio of isocyanate functionality to hydroxy functionality is in the range of between about 1.0:1 to about 3.0:1;
wherein between about 1% and about 10% of the total polymer weight solids is contributed by polyols (or other compositions having active hydrogen atoms or the ability to react with isocyanates, such as amines) having the ability to contribute ionic or hydrophilic groups to the polyurethane-urea;
wherein the reaction product of i) and ii) is at least about 80% neutralized with a weak base prior to dispersion in said aqueous media;
and, wherein, subsequent to dispersion of the reaction product of i) and ii) in said aqueous media, the remaining free isocyanate is further reacted with a tri-functional amine.

2. The composition of Claim 1 wherein the polyol is selected from the group consisting of:
a) low molecular weight saturated and unsaturated polyols;
b) polyester polyols formed from the reaction of saturated and unsaturated dihydric alcohols with saturated and unsaturated polycarboxylic acids and derivatives thereof;
c) polyesters formed by the reaction of lactones with a polyol;
d) polyether polyols resulting from the polymerization of a cyclic oxide;
e) polyether polyols formed by the addition of one or more cyclic oxides to water, ethylene glycol, propylene glycol, diethylene glycol, cyclohexane dimethanol, glycerol, or Bisphenol A;
f) polycarbonate polyols resulting from the reaction of 1,3-propanediol, 1,4-butanediol, 1,6-hexanediol, diethylene glycol or tetraethylene glycol with diaryl carbonates;
g) polyacetal polyols resulting from the reaction of a glycol with formaldehyde;
h) low molecular weight dihydroxyalkanoic acids; and mixtures thereof.

3. The composition of Claim 1 wherein the isocyanate-functional material is benzene 1,3-bis (1-isocyanato-1-methylethyl)[m-TMXDI].

4. The composition of Claim 1 wherein the catalyst is selected from the group consisting of di-butyl tin dilaurate, tin octoate and mixtures thereof.

5. The composition of Claim 2 wherein the isocyanate-functional material is benzene 1,3-bis (1-isocyanato-1-methylethyl)[m-TMXDI].

6. The composition of Claim 5 wherein the catalyst is selected from the group consisting of di-butyl tin dilaurate, tin octoate and mixtures thereof.

7. The composition of Claim 1 wherein said polyols and amines contributing ionic or hydrophilic groups comprise carboxylic acid groups, sulfonic acid groups, phosphoric acid groups, ammonium salts, phosphonium salts or sulfonium salts.

8. The composition of Claim 7 Wherein said polyols and amines contributing ionic or hydrophilic groups are selected from the group consisting of dihydroxyalkanoic acids including dimethylolpropionic acid, dimethylolacetic acid, 2,2-dimethylolbutyric acid and 2,2-dimethylolpentanoic acid, and compounds containing amino groups including d-diaminovaleric acid, 3,4-diaminobenzoic acid and 2,4-diaminotoluenesulphonic acid.

9. The composition of Claim 8 wherein said polyol contributing ionic or hydrophilic groups is dimethylolpropionic acid.

10. A composition comprising a dispersion of a polyurethane-urea in an aqueous media wherein the polyurethane-urea comprises the dispersion in an aqueous media of the reaction product of:
i) at least one polyol with
ii) at least one isocyanate-functionl material having two isocyanate-functional groups comprising an aromatic ring wherein the 1,3 (meta) carbons each have an isocyanate-functional chain pendent thereto where the NCO group is at least one carbon atom removed from the aromatic ring;
wherein the reaction between i) and ii) takes place in the presence of between about 0.01% to about 0.06% by weight of a catalyst;
wherein the ratio of i) to ii) is such that the ratio of isocyanate functionality to hydroxy functionality is in the range of between about 1.0:1 to about 3.0:1;
wherein between about 1% and about 10% of the total polymer weight solids is contributed by polyols (or other compositions having active hydrogen atoms or the ability to react with isocyanates, such as amines) having the ability to contribute ionic or hydrophilic groups to the polyurethane-urea;
wherein the reaction product of i) and ii) is at least about 80% neutralized with a weak base prior to dispersion in said aqueous media;
and, wherein, subsequent to dispersion of the reaction product of i) and ii) in said aqueous media, the remaining free isocyanate is further reacted with a tri-functional amine.

11. The composition of Claim 10 wherein the polyol is selected from the group consisting of:
a) low molecular weight saturated and unsaturated polyols;
b) polyester polyols formed from the reaction of saturated and unsaturated dihydric alcohols with saturated and unsaturated polycarboxylic acids and derivatives thereof;
c) polyesters formed by the reaction of lactones with a polyol;
d) polyether polyols resulting from the polymerization of a cyclic oxide;
e) polyether polyols formed by the addition of one or more cyclic oxides to water, ethylene, glycol, propylene glycol, diethylene glycol, cyclohexane dimethanol, glycerol, or Bisphenol A;
f) polycarbonate polyols resulting from the reaction of 1,3-propanediol, 1,4-butanediol, 1,6-hexanediol, diethylene glycol or tetraethylene glycol with diaryl carbonates;
g) polyacetal polyols resulting from the reaction of a glycol with formaldehyde;
h) low molecular weight dihydroxyalkanoic acids; and mixtures thereof.

12. The composition of Claim 10 wherein the isocyanate-functional material is benzene 1,3-bis (1-isocyanato-1-methylethyl)[m-TMXDI].

13. The composition of Claim 10 wherein the catalyst is selected from the group consisting of di-butyl tin dilaurate, tin octoate and mixtures thereof.

14. The composition of Claim 11 wherein the isocyanate-functional material is benzene 1,3-bis (1-isocyanato-1-methylethyl)[m-TMXDI].

15. The composition of Claim 14 wherein the catalyst is selected from the group consisting of di-butyl tin dilaurate, tin octoate and mixtures thereof.

16. The composition of Claim 15 wherein said polyols and amines contributing ionic or hydrophilic groups comprise carboxylic acid groups, sulfonic acid groups, phosphoric acid groups, ammonium salts, phosphonium salts or sulfonium salts.

17. The composition of Claim 16 wherein said polyols and amines contributing ionic or hydrophilic groups are selected from the group consisting of dihydroxyalkanoic acids including dimethylolpropionic acid, dimethylolacetic acid, 2,2-dimethylolbutyric acid and 2,2-dimethylolpentanoic acid, and compounds containing amino groups including d-diaminovaleric acid, 3,4-diaminobenzoic acid and 2,4-diaminotoluenesulphonic acid.

18. The composition of Claim 17 wherein said polyol contributing ionic or hydrophilic groups is dimethylolpropionic acid.

## Patentansprüche

1. Zusammensetzung, umfassend eine Dispersion aus einem Polyurethanharnstoff in einem wässrigen Medium, wobei der Polyurethanharnstoff die Dispersion in einem wässrigen Medium des Reaktionsproduktes umfaßt von:
i) wenigstens einem Polyol mit
ii) wenigstens einem isocyanatfunktionellen Material der Struktur 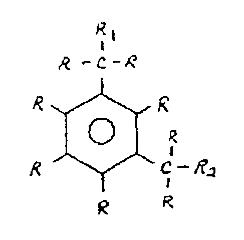
worin jedes R unabhängig Wasserstoff, Alkyl, Aralkyl oder substituierte Alkylgruppen bedeutet und R1 und R2 jeweils isocyanatfunktionell sind;
wobei die Umsetzung zwischen i) und ii) in Gegenwart zwischen etwa 0,01 bis etwa 0,06% Gew.-% eines Katalysators erfolgt;
wobei das Verhältnis von i) zu ii) derart ist, daß sich das Verhältnis von Isocyanatfunktionalität zu Hydroxyfunktionalität im Bereich zwischen etwa 1,0:1 bis etwa 3.0:1 liegt;
wobei zwischen etwa 1% und etwa 10% des Gesamtgewichts der Polymerfeststoffe durch Polyole (oder andere Zusammensetzungen mit aktivem Wasserstoffatomen oder der Fähigkeit, mit Isocyanaten zu reagieren, wie z.B. Amine) gebildet wird, welche die Fähigkeit besitzen, dem Polyurethanharnstoff ionische oder hydrophile Gruppen zur Verfügung zu stellen;
wobei das Reaktionsprodukt von i) und ii) vor der Dispersion in dem genannten wässrigen Medium zu wenigstens 80% mit einer schwachen Base neutralisiert wird;
und wobei im Anschluß an die Dispersion des Reaktionsproduktes von i) und ii) in dem genannten wässrigen Medium das verbleibende freie Isocyanat mit einem trifunktionellen Amin weiter umgesetzt wird.

2. Zusammensetzung nach Anspruch 1, bei welcher das Polyol ausgewählt ist aus der Gruppe bestehend aus:
a) niedermolekularen, gesättigten und ungesättigten Polyolen;
b) Polyesterpolyolen, die durch Umsetzung von gesättigten und ungesättigten zweiwertigen Alkoholen mit gesättigten und ungesättigten Polycarbonsäuren und Derivaten von diesen gebildet worden sind;
c) Polyestern, die durch Umsetzung von Lactonen mit einem Polyol gebildet worden sind;
d) Polyetherpolyolen, die durch Polymerisation eines cyclischen Oxids erhalten worden sind;
e) Polyetherpolyolen, die durch Zugabe von einem oder mehreren cyclischen Oxiden zu Wasser, Ethylenglycol, Propylenglycol, Diethylenglycol, Cyclohexandimethanol, Glycerin und Bisphenol A gebildet worden sind;
f) Polycarbonatpolyolen, die aus der Umsetzung von 1,3-Propandiol, 1,4-Butandiol, 1,6-Hexandiol, Diethylenglycol oder Tetraethylenglycol mit Diarylcarbonaten erhalten werden;
g) Polyacetalpolyolen, die aus der Umsetzung eines Glycols mit Formaldehyd erhalten werden;
h) niedermolekularen Dihydroxyalkansäuren; und Mischungen von diesen.

3. Zusammensetzung nach Anspruch 1, bei welcher das isocyanatfunktionelle Material Benzol-1,3-bis-(1-isocyanat-1-methylethyl) [m-TMXDI] ist.

4. Zusammensetzung nach Anspruch 1, bei welcher der Katalysator aus der Gruppe, bestehend aus Dibutylzinndilaurat, Zinnoctoat und Mischungen von diesen ausgewählt ist.

5. Zusammensetzung nach Anspruch 2, bei welcher das isocyanatfunktionelle Material Benzol-1,3-bis-(1-isocyanat-1-methylethyl) [m-TMXDI] ist.

6. Zusammensetzung nach Anspruch 5, bei welcher der Katalysator ausgewählt ist aus der Gruppe bestehend aus Dibutylzinndilaurat, Zinnoctoat und Mischungen von diesen.

7. Zusammensetzung nach Anspruch 1, bei welcher die genannten, ionische oder hydrophile Gruppen zur Verfügung stellenden Polyole und Amine Carbonsäuregruppen, Sulfonsäuregruppen, Phosphorsäuregruppen, Ammoniumsalze, Phosphoniumsalze oder Sulfoniumsalze umfassen.

8. Zusammensetzung nach Anspruch 7, bei welcher die genannten, ionische oder hydrophile Gruppen zur Verfügung stellenden Polyole und Amine ausgewählt sind aus der Gruppe bestehend aus Dihydroxyalkansäuren, einschließlich Dimethylolpropionsäure, Dimethylolessigsäure, 2,2-Dimethylolbuttersäure und 2,2-Dimethylolpentansäure, und Aminogruppen enthaltenden Verbindungen, einschließlich d-Diaminovaleriansäure, 3,4-Diaminobenzoesäure und 2,4-Diaminotoluolsulfonsäure.

9. Zusammensetzung nach Anspruch 8, bei welcher das genannte, ionische oder hydrophile Gruppen zur Verfügung stellende Polyol Dimethylolpropionsäure ist.

10. Zusammensetzung, umfassend eine Dispersion eines Polyurethanharnstoffs in einem wässrigen Medium, wobei der Polyurethanharnstoff die Dispersion in einem wässrigen Medium des Reaktionsprodukts umfaßt von:
i) wenigstens einem Polyol mit
ii) wenigstens einem isocyanatfunktionellen Material mit zwei isocyanatfunktionellen Gruppen, umfassend einen aromatischen Ring, bei welchem die 1,3 (meta)-Kohlenstoffatome jeweils eine anhängende isocyanatfunktionelle Kette aufweisen, wobei die NCO Gruppe wenigstens 1 Kohlenstoffatom entfernt von dem aromatischen Ring vorliegt;
wobei die Umsetzung zwischen i) und ii) in Gegenwart von zwischen etwa 0,01 bis etwa 0,06 Gew.-% eines Katalysators erfolgt;
wobei das Verhältnis von i) zu ii) derart ist, daß das Verhältnis von Isocyanatfunktionalität zu Hydroxyfunktionalität im Bereich von zwischen etwa 1,0:1 bis etwa 3.0:1 liegt;
wobei zwischen etwa 1% und etwa 10% des Gesamtgewichts der Polymerfeststoffe durch Polyole (oder andere Zusammensetzungen mit aktiven Wasserstoffatomen oder der Fähigkeit mit Isocyanaten zu reagieren, wie z.B. Amine) gebildet werden, die die Fähigkeit besitzen, dem Polyurethanharnstoff ionische oder hydrophile Gruppen zur Verfügung zu stellen;
wobei das Reaktionsprodukt von i) und ii) vor der Dispersion in dem genannten wässrigen Medium zu wenigstens etwa 80% mit einer schwachen Base neutralisiert wird;
und, wobei im Anschluß an die Dispersion des Reaktionsproduktes aus i) und ii) in dem genannten wässrigen Medium das verbleibende freie Isocyanat mit einem trifunktionellen Amin weiter umgesetzt wird.

11. Zusammensetzung nach Anspruch 10, bei welcher das Polyol ausgewählt ist aus der Gruppe bestehend aus:
a) niedermolekularen, gesättigten und ungesättigten Polyolen;
b) Polyesterpolyolen, die durch die Umsetzung von gesättigten und ungesättigten zweiwertigen Alkoholen mit gesättigten und ungesättigten Polycarbonsäuren und Derivaten von diesen gebildet worden sind;
c) Polyestern, die durch Umsetzung von Lactonen mit einem Polyol gebildet worden sind;
d) Polyetherpolyolen, die durch Polymerisation eines cyclischen Oxids erhalten worden sind;
e) Polyetherpolyolen, die durch Zugabe von einem oder mehreren cyclischen Oxiden zu Wasser, Ethylenglycol, Propylenglycol, Diethylenglycol, Cyclohexandimethanol, Glycerin oder Bisphenol A gebildet worden sind;
f) Polycarbonatpolyolen, die durch Umsetzung von 1,3-Propandiol, 1,4-Butandiol, 1,6-Hexandiol, Diethylenglycol oder Tetraethylenglycol mit Diarylcarbonaten erhalten worden sind;
g) Polyacetalpolyolen, die durch Umsetzung eines Glycols mit Formaldehyd erhalten worden sind;
h) niedermolekularen Dihydroxyalkansäuren; und Mischungen von diesen.

12. Zusammensetzung nach Anspruch 10, bei welcher das isocyanatfunktionelle Material Benzol-1,3-bis-(1-isocyanat-1-methylethyl) [m-TMXDI] ist.

13. Zusammensetzung nach Anspruch 10, bei welcher der Katalysator ausgewählt ist aus der Gruppe bestehend aus Dibutylzinndilaurat, Zinnoctoat und Mischungen von diesen.

14. Zusammensetzung nach Anspruch 11, bei welcher das isocyanatfunktionelle Material Benzol-1,3-bis-(1-isocyanat-1-methylethyl) [m-TMXDI] ist.

15. Zusammensetzung nach Anspruch 14, bei welcher der Katalysator ausgewählt ist aus der Gruppe bestehend aus Dibutylzinndilaurat, Zinnoctoat und Mischungen von diesen.

16. Zusammensetzung nach Anspruch 15, bei welcher die genannten, ionische oder hydrophile Gruppen zur Verfügung stellenden Polyole und Amine Carbonsäuregruppen, Sulfonsäuregruppen, Phosphorsäuregruppen, Ammoniumsalze, Phosphoniumsalze oder Sulfoniumsalze umfassen.

17. Zusammensetzung nach Anspruch 16, bei welcher die genannten, ionische oder hydrophile Gruppen zur Verfügung stellenden Polyole und Amine ausgewählt sind aus der Gruppe bestehend aus Dihydroxyalkansäuren, einschließlich Dimethylolpropionsäure, Dimethylolessigsäure, 2,2-Dimethylolbuttersäure und 2,2-Dimethylolpentansäure, und Verbindungen, die Aminogruppen enthalten, einschließlich d-Diaminovaleriansäure, 3,4-Diaminobenzoesäure und 2,4-Diaminotoluolsulfonsäure.

18. Zusammensetzung nach Anspruch 17, bei welcher das genannte, ionische oder hydrophile Gruppen zur Verfügung stellende Polyol Dimethylolpropionsäure ist.

## Revendications

1. Composition comprenant une dispersion d'une polyuréthanne-urée dans un milieu aqueux dans laquelle la polyuréthanne-urée comprend la dispersion dans un milieu aqueux du produit de la réaction de :
i) au moins un polyol avec
ii) au moins un matériau à groupements fonctionnels isocyanate ayant la structure : 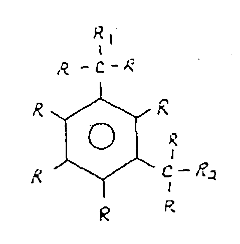
dans laquelle chaque R est indépendamment un atome d'hydrogène ou un groupe alkyle, aralkyle ou alkyle substitué et R¹ et R² sont chacun un groupement fonctionnel isocyanate ;
dans laquelle la réaction de i) et ii) se déroule en présence d'entre environ 0,01 % et environ 0,06 % en poids d'un catalyseur ;
dans laquelle le rapport de i) à ii) est tel que le rapport de la fonctionnalité isocyanate à la fonctionnalité hydroxy est compris dans l'intervalle situé entre environ 1,0 : 1 et environ 3,0 : 1 ;
dans laquelle entre environ 1 % et environ 10 % des solides totaux de la charge de polymère sont fournis par des polyols (ou d'autres compositions ayant des atomes d'hydrogène actif ou la capacité de réagir avec les isocyanates, comme les amines) ayant la capacité de fournir des groupes ioniques ou hydrophiles à la polyuréthane-urée ;
dans laquelle le produit de la réaction de i) et ii) est au moins neutralisé à environ 80% avec une base faible avant la dispersion dans ledit milieu aqueux ;
et dans laquelle, après la dispersion du produit de la réaction de i) et de ii) dans ledit milieu aqueux, l'isocyanate libre restant est encore mis à réagir avec une amine trifonctionnelle.

2. Composition selon la revendication 1, dans laquelle le polyol est choisi dans le groupe comprenant :
a) les polyols saturés et insaturés à faible masse moléculaire ;
b) les polyesters-polyols formés à partir de la réaction d'alcools dihydroxylés saturés et insaturés avec des acides polycarboxyliques saturés et insaturés et leurs dérivés ;
d) les polyesters formés par la réaction des lactones avec un polyol ;
d) les polyéthers-polyols résultant de la polymérisation d'un oxyde cyclique ;
e) les polyéthers-polyols formés par l'addition d'un ou plusieurs oxydes cycliques à l'eau, l'éthylèneglycol, le propylèneglycol, le diéthylèneglycol, le cyclohexanediméthanol, le glycérol ou le bisphénol A ;
f) les polycarbonates-polyols résultant de la réaction du 1,3-propanediol, du 1,4-butanediol, du 1,6-hexanediol, du diéthylèneglycol ou du tétraéthylèneglycol avec des diaryl-carbonates ;
g) les polyacétals-polyols résultant de la réaction d'un glycol avec le formaldéhyde ;
h) les acides dihydroxyalcanoïques de faible masse moléculaire ; et leurs mélanges.

3. Composition selon la revendication 1, dans laquelle le matériau à groupements fonctionnels isocyanate est le benzène 1,3-bis (1-isocyanato-1-méthyléthyl) (m-TMXDI).

4. Composition selon la revendication 1, dans laquelle le catalyseur est choisi dans le groupe comprenant le dilaurate de dibutylétain, l'octoacte d'étain et leurs mélanges.

5. Composition selon la revendication 2, dans laquelle le matériau à groupements fonctionnels isocyanate est le benzène 1,3-bis(1-isocyanato-1-méthyléthyl) (m-TMXDI).

6. Composition selon la revendication 5, dans laquelle le catalyseur est choisi dans le groupe comprenant le dilaurate de dibutylétain, l'octoate d'étain et leurs mélanges.

7. Composition selon la revendication 1, dans laquelle lesdits polyols et lesdites amines fournissant les groupes ioniques ou hydrophiles comprennent les groupes acide carboxylique, les groupes acide sulfonique, les groupes acide phosphorique, les sels d'ammonium, les sels de phosphonium ou les sels de sulfonium.

8. Composition selon la revendication 7, dans laquelle lesdits polyols et lesdites amines fournissant les groupes ioniques ou hydrophiles sont choisis dans le groupe comprenant les acides dihydroxyalcanoïques englobant l'acide diméthylolpropionique, l'acide diméthylolacétique, l'acide 2,2-diméthylolbutyrique et l'acide 2,2-diméthylolpentanoïque, et les composés contenant des groupes amino englobant l'acide d-diaminovalérique, l'acide 3,4-diaminobenzoïque et l'acide 2,4-diaminotoluènesulfonique.

9. Composition selon la revendication 8, dans laquelle ledit polyol fournissant des groupes ioniques ou hydrophiles est l'acide diméthylolpropionique.

10. Composition comprenant une dispersion d'une polyuréthanne-urée dans un milieu aqueux dans laquelle la polyuréthanne-urée comprend la dispersion dans un milieu aqueux du produit de la réaction de :
i) au moins un polyol avec
ii) au moins un matériau à groupements fonctionnels isocyanate ayant deux groupes fonctionnels isocyanates comprenant un noyau aromatique dans lequel les atomes de carbone 1,3 (méta) ont chacun une chaîne à groupement fonctionnel isocyanate accroché à eux, le groupe NCO étant séparé par au moins un atome de carbone du noyau aromatique ;
dans laquelle la réaction entre i) et ii) se déroule en présence d'entre environ 0,01 % et environ 0,06 % en poids d'un catalyseur ;
dans laquelle le rapport de i) à ii) est tel que le rapport de la fonctionnalité isocyanate à la fonctionnalité hydroxy est compris dans l'intervalle situé entre environ 1,0 : 1 et environ 3,0 : 1 ;
dans laquelle entre environ 1 % et environ 10 % des solides totaux de la charge de polymère sont fournis par les polyols (ou d'autres compositions ayant des atomes d'hydrogène actifs ou la capacité de réagir avec les isocyanates, comme les amines) ayant la capacité de fournir des groupes ioniques ou hydrophiles à la polyuréthanne-urée ;
dans laquelle le produit de la réaction de i) et ii) est au moins neutralisé à environ 80 % à l'aide d'une base faible avant la dispersion dans ledit milieu aqueux ;
et dans laquelle, après la dispersion du produit de la réaction de i) et ii) dans ledit milieu aqueux, l'isocyanate libre restant est encore mis à réagir avec une amine trifonctionnelle.

11. Composition selon la revendication 10, dans laquelle le polyol est choisi dans le groupe comprenant :
a) les polyols saturés et insaturés à faible masse moléculaire ;
b) les polyesters-polyols formés à partir de la réaction d'alcools dihydroxylés saturés et insaturés avec des acides polycarboxyliques saturés et insaturés et leurs dérivés ;
c) les polyesters formés par la réaction des lactones avec un polyol ;
d) les polyéthers-polyols résultant de la polymérisation d'un oxyde cyclique ;
e) des polyéthers-polyols formés par l'addition d'un ou plusieurs oxydes cycliques à l'eau, l'éthylèneglycol, le propylèneglycol, le diéthylèneglycol, le cyclohexanediméthanol, le glycérol ou le bisphénol A ;
f) les polycarbonates-polyols résultant de la réaction du 1,3-propanediol, du 1,4-butanediol, du 1,6-hexanediol, du diéthylèneglycol ou du tétraéthylèneglycol avec des diaryl-carbonates ;
g) les polyacétals-polyols résultant de la réaction d'un glycol avec le formaldéhyde ;
h) les acides dihydroxyalcanoïques de faible masse moléculaire ; et leurs mélanges.

12. Composition selon la revendication 10, dans laquelle le matériau à groupements fonctionnels isocyanate est le benzène 1,3-bis (1-isocyanato-1-méthyléthyl) (m-TMXDI).

13. Composition selon la revendication 10, dans laquelle le catalyseur est choisi dans le groupe comprenant le dilaurate de dibutylétain, l'octoate d'étain et leurs mélanges.

14. Composition selon la revendication 11, dans laquelle le matériau à groupements fonctionnels isocyanate est le benzène 1,3-bis(1-isocyanato-1-méthyléthyl) (m-TMXDI).

15. Composition selon la revendication 14, dans laquelle le catalyseur est choisi dans le groupe comprenant le dilaurate de dibutylétain, l'octoate d'étain et leurs mélanges.

16. Composition selon la revendication 15, dans laquelle lesdits polyols et lesdites amines fournissant les groupes ioniques ou hydrophiles comprennent les groupes acide carboxylique , les groupes acide sulfonique , les groupes acide phosphorique , les sels d'ammonium, les sels de phosphonium ou les sels de sulfonium.

17. Composition selon la revendication 16, dans laquelle lesdits polyols et lesdites amines fournissant les groupes ioniques ou hydrophiles sont choisis dans le groupe comprenant les acides dihydroxyalcanoïques englobant l'acide diméthylolpropionique, l'acide diméthylolacétique, l'acide 2,2-diméthylolbutyrique et l'acide 2,2-diméthylolpentanoïque, et les composés comprenant des groupes amino englobant l'acide d-diaminovalérique, l'acide 3,4-diaminobenzoïque et l'acide 2,4-diaminotoluènesulfonique.

18. Composition selon la revendication 17, dans laquelle ledit polyol fournissant les groupes ioniques ou hydrophiles est l'acide diméthylolpropionique.
